# EUROPEAN PATENT APPLICATION

(11) **EP 4 722 686 A1**
(43) Date of publication of application: **08.04.2026**
(21) Application number: 24825910.3
(22) Date of filing: 19.06.2024
(51) Int. Cl.: G01N 1/00, A61J 1/20

(54) **COLLECTION KIT AND COLLECTION METHOD**

(30) Priority: 19.06.2023 JP 2023099951; 31.08.2023 JP 2023141380
(71) Applicant: Terumo Kabushiki Kaisha, Tokyo 151-0072 (JP)
(72) Inventor: OKABE, Hiroshi, Fujinomiya-shi, Shizuoka 418-0004 (JP); SATO, Sayori, Fujinomiya-shi, Shizuoka 418-0004 (JP)
(74) Representative: TBK
(86) International application number: PCT/JP2024/022143
(87) International publication number: WO 2024/262509

(57) **Abstract**

A collection kit (10) includes an inflow tube (12) to which a medical bag (80) is connected, and a collection bag (14) connected a downstream of the inflow tube. The collection bag includes a plurality of housing chambers (28), a common flow path (24) connected to the downstream of the inflow tube, and a plurality of coupling flow paths (26) branching from the common flow path and respectively communicating with the plurality of housing chambers. A collection target (M) housed in the medical bag is temporarily stored in the plurality of housing chambers. The collection target is transferred from the plurality of housing chambers to the plurality of sampling containers (90), respectively.

## Description

### Technical Field

The present invention relates to a collection kit for transferring a collection target (mainly liquid medicine) housed in a medical bag to a plurality of sampling containers. The present invention also relates to a collection method for collecting a collection target in a medical bag into a plurality of sampling containers using a collection kit.

### Background Art

Types of blood products include a red blood cell product, a plasma product, a platelet product, and a whole blood product. Among such products, blood products containing components required by the patient are selected and used. Blood products are used for blood transfusion, for example.

The blood products are stored and transported in the state of being housed in medical bags. In order to ensure safety of the blood products, a small amount of sample may be collected from a medical bag to perform a culture test. In the culture test, a sample is collected from a medical bag into a culture bottle, and the culture bottle is placed in an environment suitable for bacterial growth. The presence or absence of bacteria in the blood product is determined based on whether or not growth of bacteria is observed.

Among the blood products, a test for the platelet product is performed by the following procedure. Hereinafter, a medical bag housing a platelet product is referred to as a platelet bag. First, a small volume collection bag is connected to the platelet bag. Thereafter, a portion of the platelet product is transferred from the platelet bag to a collection bag. Next, the collection bag is disconnected from the platelet bag. The platelet bag and the collection bag may be a kit pre-connected to each other.

The collection bag is conveyed to a clean bench or a safety cabinet. In a clean bench or a safety cabinet, the platelet product in the collection bag is infused into a culture bottle. Prior to the infusion, a tube of the collection bag is connected to a tube extending from a sample collection tube. A prescribed amount of the platelet product is transferred from the collection bag to the sample collection tube with reference to scales of the sample collection tube.

Thereafter, an operator operates a valve of the sample collection tube while visually checking the scales of the sample collection tube to transfer a prescribed amount of the platelet product from the sample collection tube to the culture bottle. In the culture test, anaerobic culture and aerobic culture are performed. Therefore, the platelet product is dispensed into a culture bottle used for the anaerobic culture and a culture bottle used for the aerobic culture. Thereafter, the culture bottles are set in a culturing apparatus and subjected to the culture test for a predetermined period.

For example, US 8777921 discloses a collection device for collecting a sample from a medical bag.

### Citation List

### Patent Literature

Patent Literature 1: US 8777921

### Summary of Invention

From the viewpoint of further improving the safety of a platelet product, a culture test for all the platelet products has been studied. Therefore, it is required to improve the work efficiency of the culture test of the platelet product. In addition, in the case of performing the culture test for the total number, it is desirable that an instrument for distributing the platelet product into culture bottles has a simple structure such that cost can be reduced.

An object of the present invention is to solve the problem described above.
(1) First aspect of the present disclosure is a collection kit for collecting a collection target housed in a medical bag into a plurality of sampling containers, the collection kit including: an inflow tube to which the medical bag is connected; and a collection bag connected to a downstream of the inflow tube and formed by overlapping and welding two flexible sheets, in which the collection bag includes: a plurality of housing chambers that houses the collection target, a common flow path connected to the downstream of the inflow tube, a plurality of coupling flow paths that branches from the common flow path and communicate with the plurality of housing chambers, respectively, a plurality of exhaust flow paths connected to upper portions of the plurality of housing chambers, respectively, for exhausting air inside the plurality of housing chambers, and a plurality of outflow paths connected to lower portions of the plurality of housing chambers, respectively, allows the collection target to flow out from the plurality of housing chambers, and transfers collection target to the plurality of sampling containers, respectively.
   The collection kit can be manufactured at low cost since the collection bag is integrally formed using the two flexible sheets. In addition, in a case where communication between the inflow tube and each of the plurality of coupling flow paths is blocked, the plurality of housing chambers can be separated as independent inner chambers. Therefore, a necessary amount of the collection target can be transferred to each of the plurality of sampling containers.
(2) In the collection kit according to the above item (1), the plurality of coupling flow paths may be connected to the lower portions of the plurality of housing chambers or lower sides of the plurality of housing chambers, respectively.
   In this configuration, the collection target is introduced into the housing chamber from the lower portion or the lower side of the housing chamber. Accordingly, the air in the housing chamber rises and is exhausted from the exhaust flow path provided above the housing chamber. Therefore, air hardly remains in the housing chamber. In other words, the residual amount of air in the housing chamber can be reduced.
(3) In the collection kit according to the above item (2), the plurality of coupling flow paths may communicate with the plurality of housing chambers via the plurality of outflow paths, respectively.
   In this case, when the collection target is collected in the housing chamber, at least a part of the air in the outflow path is replaced with the collection target. Therefore, the amount of air mixed into the sampling container can be reduced.
(4) In the collection kit according to any one of the above items (1) to (3), a plurality of adapters which are connected to the plurality of the outflow paths and to which the plurality of sampling containers are attached, respectively, may be included.
   By attaching the sampling container to the adapter, the sampling container can be easily connected to the outflow path via the adapter. Here, the adapter may be detachably connected to the collection bag.
(5) In the collection kit according to any one of the above items (1) to (4), a holder that holds the collection bag and maintains a shape of the collection bag may be included.
   According to this configuration, for example, even when the collection target is transferred to the sampling container, the shape of the collection bag is maintained by the holder. Therefore, the collection kit can be easily handled.
(6) In the collection kit according to the above item (5), the collection kit may include: a plurality of adapters respectively connected to the plurality of outflow paths and to which the plurality of sampling containers are respectively attached, and a plurality of connection members respectively connecting the plurality of adapters to the plurality of outflow paths, and the holder has a plurality of engagement holes respectively engaged with the plurality of connection members.
   By engaging the plurality of connection members with the plurality of engagement holes, the collection bag can be easily held in the holder.
(7) In the collection kit according to any one of the above items (5) or (6), the collection kit may include a relay member that connects the inflow tube to the common flow path, and the holder may have a fitting hole into which the relay member is fitted.
   By connecting the relay member with the fitting hole, the collection bag can be easily held in the holder.
(8) In the collection kit according to any one of the above items (5) to (7), the collection kit may include a plurality of attachment members for attaching a plurality of exhaust valves to the plurality of exhaust flow paths, respectively, and the holder may have a plurality of positioning holes for positioning and fixing the plurality of attachment members, respectively.
   By positioning and fixing the plurality of attachment members in the plurality of positioning holes, the collection bag can be easily held in the holder.
(9) In the collection kit according to any one of the above items (5) to (8), the holder may have a notch into which a jig for holding the collection kit is inserted.
   When the collection kit is held by the jig, the jig is inserted into the notch, so that the jig is prevented from interfering with the holder.
(10) In the collection kit according to any one of the above items (5) to (9), the holder may have a plurality of pin portions, the collection bag may have a plurality of insertion holes into which the plurality of pin portions is inserted, respectively, and the plurality of insertion holes may be formed at positions adjacent to the plurality of coupling flow paths.
   By inserting the pin portion into the insertion hole, the collection bag is reliably held by the holder. In addition, the collection bag is prevented from being displaced with respect to the holder.
(11) In the collection kit according to any one of the above items (5) to (10), the holder may have a main surface facing the collection bag and an abutting portion protruding toward the collection bag on the main surface, and the abutting portion may abut on a portion of the collection bag where the plurality of coupling flow paths is formed.
   When the communication between the coupling flow path and the common flow path is blocked by pressing the vicinity of the coupling flow path with the clamp portion of the jig, the collection bag is sandwiched between the clamp portion and the abutting portion. Therefore, it is possible to reduce the size of the clamp portion as compared with the case where the abutting portion does not exist. In addition, since the abutting portion supports the clamp portion, it is easy to block the communication between the coupling flow path and the common flow path.
(12) In the collection kit according to any one of the above items (5) to (11), the holder may have a main surface facing the collection bag and a back surface that is a back side of the main surface, an outer peripheral edge portion of the holder may have a first protruding portion protruding in a direction away from the main surface and a second protruding portion protruding in a direction away from the back surface along a thickness direction connecting the main surface and the back surface, the first protruding portion may have a first engagement step portion, the second protruding portion may have a second engagement step portion, the plurality of collection kits may be stacked in the thickness direction, and in a state where the plurality of collection kits is stacked, the first engagement step portion of one of the collection kits adjacent to each other and the second engagement step portion of the other of the collection kits adjacent to each other may engage with each other.
   In a case where a plurality of holders holding the collection bag is prepared, the first engagement step portion of the holder and the second engagement step portion of another holder can be engaged. By repeating the engagement, it is possible to form a stacked body in which a plurality of holders is overlapped along the thickness direction.
(13) In the collection kit according to any one of the above items (1) to (12), when the collection bag is viewed from the thickness direction of the collection bag, the plurality of housing chambers may have a substantially elliptical shape having a major axis and a minor axis, and the major axis may extend along an up-down direction.
   In a case where the housing chamber has the above-described shape, air hardly remains when the collection target is introduced into the housing chamber. Therefore, it is easy to house a necessary amount of the collection target in the housing chamber.
(14) In the collection kit according to any one of the above items (1) to (13), the plurality of housing chambers may include a first housing chamber and a second housing chamber, the plurality of coupling flow paths may include a first coupling flow path that transfers the collection target toward the first housing chamber and a second coupling flow path that transfers the collection target toward the second housing chamber, and the first coupling flow path and the second coupling flow path may be arranged so as to form a V shape having a top portion facing downward.
   When the collection target moves from the common flow path toward the first housing chamber and the second housing chamber, the collection target moves from the lower side to the upper side in the first coupling flow path and the second coupling flow path. Therefore, air is less likely to remain in the coupling flow path.
(15) In the collection kit according to any one of the above items (1) to (14), shapes and positions in each of the plurality of coupling flow paths, the plurality of housing chambers, and the plurality of outflow paths may be in a line symmetric relationship with the common flow path as a center of symmetry.
   In this case, it is easy to distribute the collection target evenly to the plurality of housing chambers. In addition, the housing amounts of the collection target in the plurality of housing chambers are substantially the same. Therefore, substantially the same amount of the collection target can be transferred to each of the plurality of sampling containers.
(16) Second aspect of the present disclosure is a collection method for collecting a collection target housed in a medical bag into a plurality of sampling containers via a collection kit, in which the collection kit includes: an inflow tube to which the medical bag is connected, and a collection bag connected to a downstream of the inflow tube and formed by overlapping and welding two flexible sheets, in which the collection bag includes: a plurality of housing chambers that houses the collection target, a common flow path connected to the downstream of the inflow tube, a plurality of coupling flow paths that branches from the common flow path and communicate with the plurality of housing chambers, respectively, a plurality of exhaust flow paths connected to upper portions of the plurality of housing chambers, respectively, for exhausting air inside the plurality of housing chambers, and a plurality of outflow paths connected to lower portions of the plurality of housing chambers, respectively, allows the collection target to flow out from the plurality of housing chambers, and transfers the collection target to the plurality of sampling containers, respectively, and the collection method includes: a process of connecting the medical bag to the inflow tube, a process of dividing the collection target moved from the medical bag into the collection bag through the inflow tube and the common flow path into a plurality of branches by the plurality of coupling flow paths and introducing the plurality of branches into the plurality of housing chambers, respectively, a process of separating the medical bag from the inflow tube after introducing the plurality of branches into the plurality of housing chambers, respectively, and a process of blocking communication between the plurality of coupling flow paths and the common flow path after introducing the plurality of branches into the plurality of housing chambers, respectively, a process of respectively connecting the plurality of sampling containers to the plurality of outflow paths after the plurality of branches is introduced into the plurality of housing chambers, respectively, and a process of transferring the collection target from the plurality of housing chambers to the plurality of sampling containers respectively connected to the plurality of outflow paths.
   According to this collection method, the collection target in the medical bag can be transferred to the plurality of sampling containers distributed by the collection bag. Therefore, in a case where the collection target is, for example, a blood product such as a platelet product, the work efficiency of the culture inspection can be improved. In addition, since the communication between each of the plurality of coupling flow paths and the common flow path is blocked, the collection target is prevented from moving between the plurality of housing chambers. Accordingly, a necessary amount of the collection target can be introduced to each of the plurality of sampling containers.
(17) In the collection method according to the above item (16), communication between the plurality of coupling flow paths and the common flow path may be blocked by forming a plurality of welding seal portions in the plurality of coupling flow paths, respectively, or providing a plurality of clamps in the plurality of coupling flow paths, respectively.

Communication between the plurality of coupling flow paths and the common flow path can be easily blocked by the welding seal portion or the clamp. As a result, it is possible to reliably prevent the collection target from moving among the plurality of housing chambers.

According to the present invention, a collection kit can be manufactured at low cost. In addition, after the collection target in the medical bag is distributed to the plurality of housing chambers by the collection bag, a necessary amount of the collection target can be transferred to each of the plurality of sampling containers. As a result, the work efficiency of the test using the collected sample can be improved.

### Brief Description of Drawings

Fig. 1 is a schematic front view of a collection kit according to a first embodiment of the present invention.
Fig. 2 is an explanatory view of a process of storing a collection target in a housing chamber in the collection kit.
Fig. 3 is an explanatory diagram of a process of transferring the collection target from the housing chamber to the sampling container.
Fig. 4 is a schematic front view of a collection bag constituting the collection kit.
Fig. 5 is a partial front cross-sectional view of a main part of the collection kit in which an adapter is configured to be detachable with respect to the collection bag.
Fig. 6 is a schematic front view of a collection kit according to a second embodiment of the present invention.
Fig. 7 is a schematic perspective view of a holder illustrated in Fig. 6.
Fig. 8 is a schematic exploded perspective view of a collection kit according to a modification of the second embodiment of the present invention.
Fig. 9 is a schematic perspective view of a holder illustrated in Fig. 8 as viewed from a rear side.
Fig. 10 is a schematic perspective view illustrating a state in which a plurality of holders holding collection bags is stacked.

### Description of Embodiments

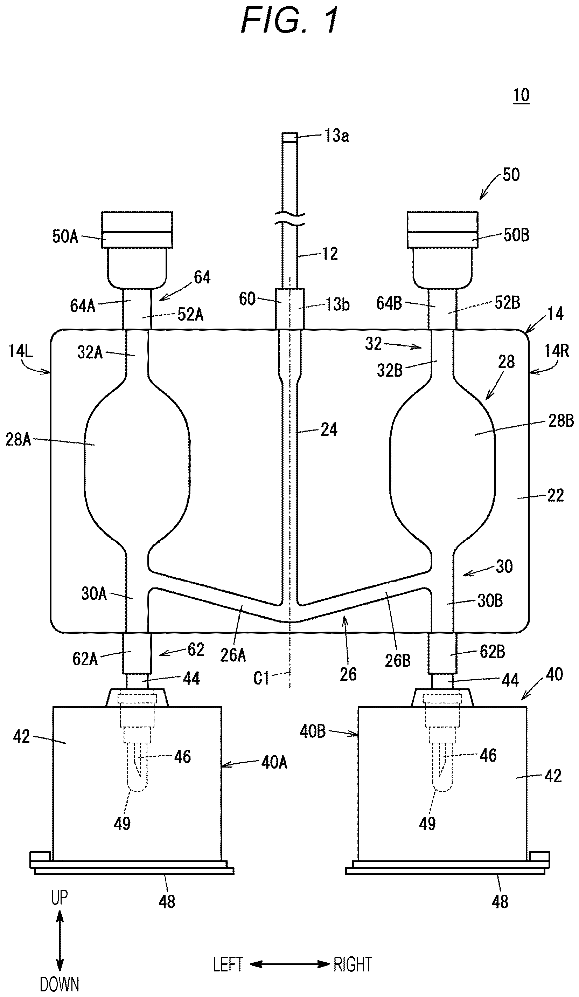

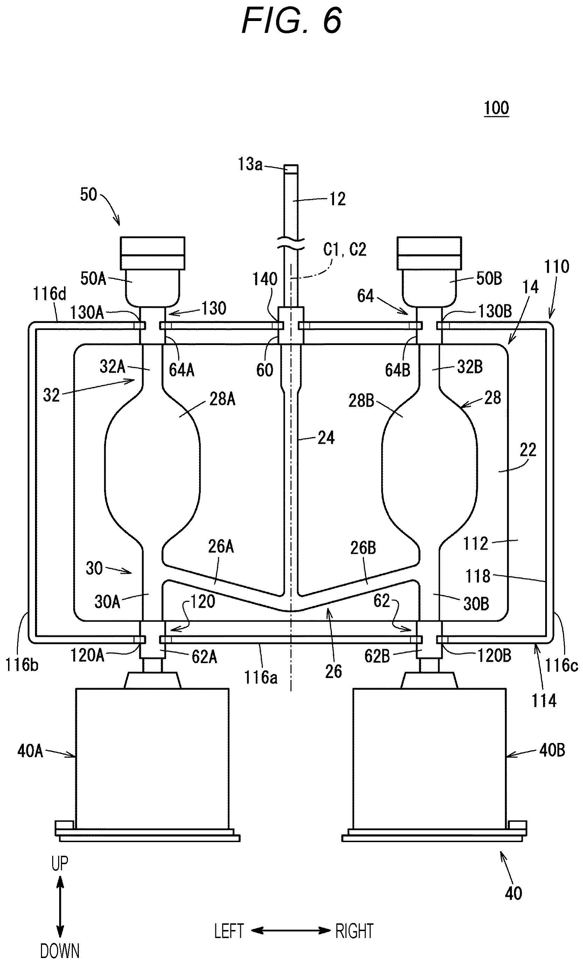

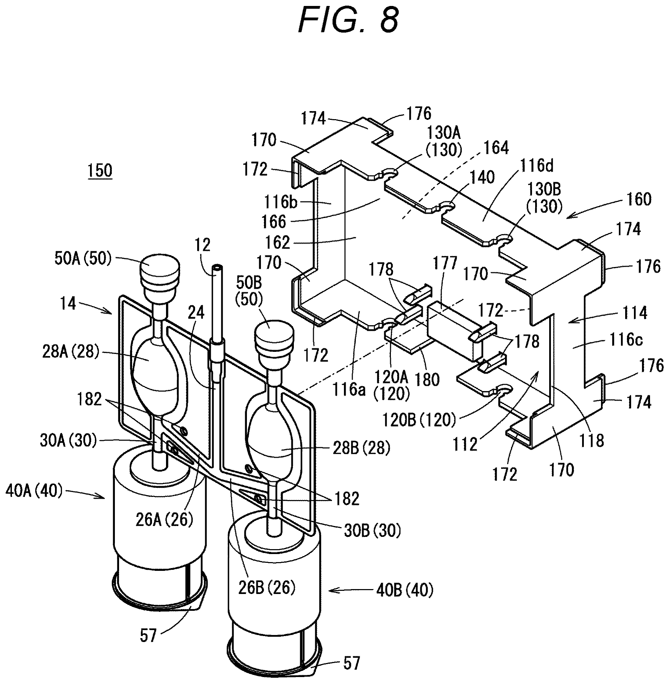

The up, down, left, and right in the following description correspond to the up, down, left, and right in Figs. 1 to 9, respectively. Therefore, for example, the exhaust valve 50 is positioned above (higher than) the housing chamber 28, and the adapter 40 is positioned below (lower than) the housing chamber 28. In addition, "width direction" refers to the left-right direction in Figs. 1 to 6. The "thickness direction" refers to a direction orthogonal to the up-down direction and the width direction. The collection kit 10 illustrated in Figs. 1 to 3, the collection kit 100 illustrated in Fig. 6, and the collection kit 150 illustrated in Fig. 8 are typically used in a posture in which the vertical direction in Figs. 1 to 9 is aligned with the up-down direction.

In the following first and second embodiments, an aspect is exemplified in which each of the housing chamber 28, the coupling flow path 26, the outflow path 30, the adapter 40, the sampling container 90, and the like is two, but the number of these components may be three or more. However, the numbers of the housing chamber 28, the coupling flow path 26, the outflow path 30, the adapter 40, and the sampling container 90 are the same. Similarly, the number of the exhaust flow path 32 and the number of exhaust valve 50 may be three or more. Similarly, the number of the connection member 62, the attachment member 64, the engagement hole 120, and the positioning hole 130 may be three or more.

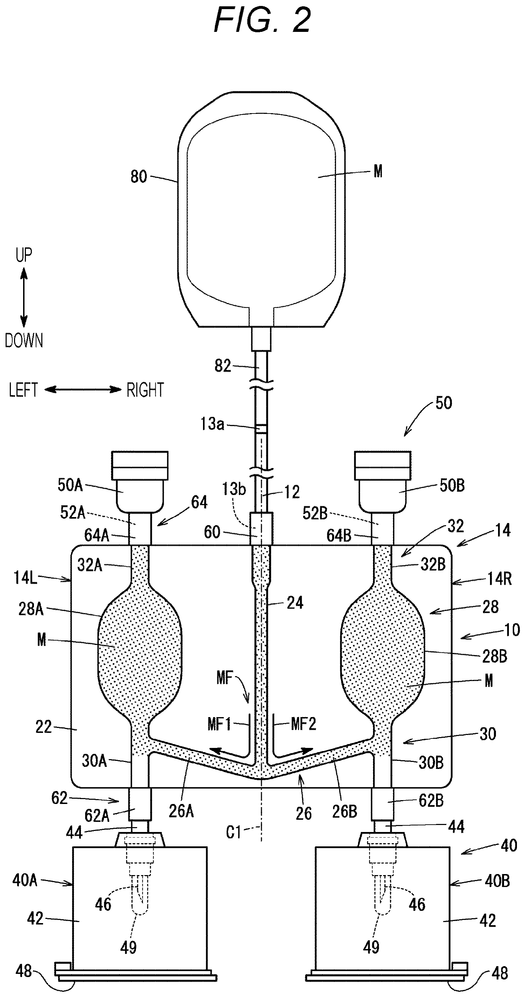

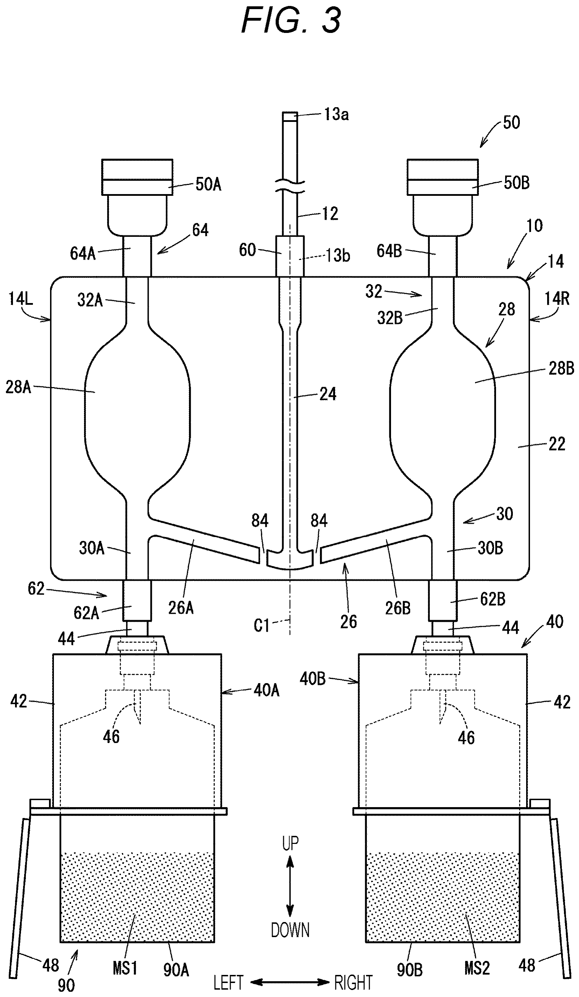

Fig. 1 is a schematic front view of a collection kit 10 according to a first embodiment. The collection kit 10 is used to transfer a collection target M housed in a medical bag 80 illustrated in Fig. 2 to the two sampling containers 90 illustrated in Fig. 3. The collection target M is, for example, a blood product such as a platelet product. The collection target M may be a medicine other than a blood product. The collection target M may be a liquid sample other than a medicine.

Hereinafter, in order to easily distinguish the two sampling containers 90, the left sampling container 90 in Fig. 3 is referred to as a first sampling container 90A, and the right sampling container 90 in Fig. 3 is referred to as a second sampling container 90B. In a case where the collection target M is a blood product such as a platelet product, whether or not the blood product collected in the first sampling container 90A and the second sampling container 90B contains bacteria is examined. In this case, the first sampling container 90A and the second sampling container 90B are culture bottles. The blood product in the first sampling container 90A is used, for example, for anaerobic culture, and whether or not anaerobic bacteria grow is observed. The blood product in the second sampling container 90B is used, for example, for aerobic culture, and whether or not aerobic bacteria grow is observed.

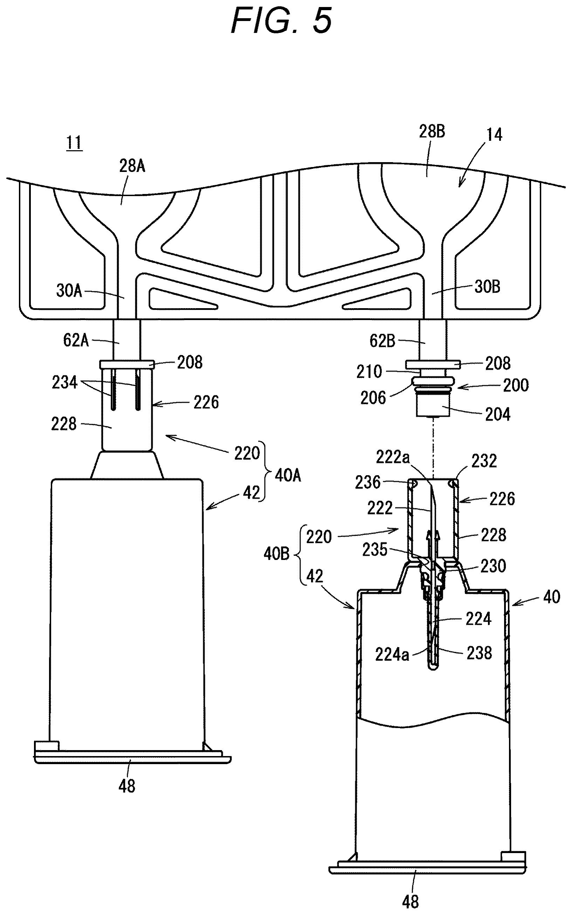

The configuration of the collection kit 10 will be described. The collection kit 10 includes an inflow tube 12, a collection bag 14, and two adapters 40. The two adapters 40 are a first adapter 40A and a second adapter 40B. As illustrated in Fig. 5, the first adapter 40A and the second adapter 40B may be detachable with respect to the collection bag 14. This configuration will be described later in detail.

The inflow tube 12 is, for example, a transparent or semi-transparent medical tube made of a thermoplastic resin such as a vinyl chloride resin. The inflow tube 12 can be connected to or separated from another medical tube without exposing the inside thereof to outside air, for example, by using an aseptic connection device, a tube sealer, and the like. The inflow tube 12 has an upstream side end portion 13a and a downstream side end portion 13b. In an initial state in which the collection kit 10 is provided as a product, the upstream side end portion 13a is welded and sealed.

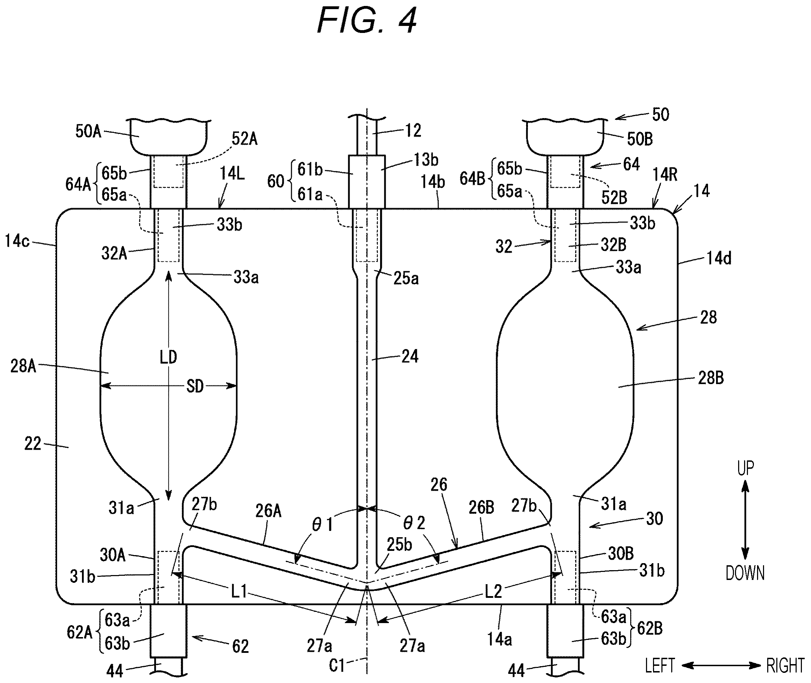

As will be described later, the downstream side end portion 13b is connected to an upper side portion 14b (see Fig. 4) of the collection bag 14 via a relay member 60. The relay member 60 is, for example, a sleeve made of a material harder than the collection bag 14.

The collection bag 14 has two flexible sheets 22 overlapping each other in the thickness direction. A common flow path 24, two coupling flow paths 26, two housing chambers 28, two outflow paths 30, and two exhaust flow paths 32 are formed between the two flexible sheets 22. The two coupling flow paths 26 are a first coupling flow path 26A and a second coupling flow path 26B. The two housing chambers 28 are a first housing chamber 28A and a second housing chamber 28B. The two outflow paths 30 are a first outflow path 30A and a second outflow path 30B, and the two exhaust flow paths 32 are a first exhaust flow path 32A and the second exhaust flow path 32B.

In the two flexible sheets 22, portions other than the first coupling flow path 26A, the second coupling flow path 26B, the first housing chamber 28A, the second housing chamber 28B, the first outflow path 30A, the second outflow path 30B, the first exhaust flow path 32A, and the second exhaust flow path 32B are welded and joined to each other. In the initial state, the first coupling flow path 26A, the second coupling flow path 26B, the first housing chamber 28A, the second housing chamber 28B, the first outflow path 30A, the second outflow path 30B, the first exhaust flow path 32A and the second exhaust flow path 32B bulge in the thickness direction of the collection bag 14. In the first coupling flow path 26A, the second coupling flow path 26B, the first housing chamber 28A, the second housing chamber 28B, the first outflow path 30A, the second outflow path 30B, the first exhaust flow path 32A and the second exhaust flow path 32B, one flexible sheet 22 and the other flexible sheet 22 are away from each other along the thickness direction.

The collection bag 14 has a rectangular shape with a long side in the width direction and a short side in the up-down direction in a front view. Therefore, as illustrated in Fig. 4, the collection bag 14 has a lower side portion 14a and an upper side portion 14b extending along the width direction, and a left side portion 14c and a right side portion 14d extending along the up-down direction.

The common flow path 24 extends along the up-down direction from the upper side portion 14b toward the lower side portion 14a so as to divide the collection bag 14 into substantially half in the width direction. That is, the common flow path 24 divides the collection bag 14 into a first region 14L on the left side of the common flow path 24 and a second region 14R on the right side of the common flow path 24. The first coupling flow path 26A, the first housing chamber 28A, the first outflow path 30A, and the first exhaust flow path 32A are positioned in the first region 14L. The second coupling flow path 26B, the second housing chamber 28B, the second outflow path 30B, and the second exhaust flow path 32B are positioned in the second region 14R. In the illustrated example, the first region 14L and the second region 14R have a positional relationship of line symmetry with an axis C1 of the common flow path 24 as the center of symmetry, but the present invention is not particularly limited thereto.

The common flow path 24 has an upstream side end portion 25a and a downstream side end portion 25b. The downstream side end portion 13b of the inflow tube 12 is connected to the upstream side end portion 25a of the common flow path 24 via the above relay member 60. The relay member 60 includes a small diameter portion 61a and a large diameter portion 61b. The small diameter portion 61a is inserted into the upstream side end portion 25a of the common flow path 24. The large diameter portion 61b protrudes upward from the upper side portion 14b of the collection bag 14. The downstream side end portion 13b of the inflow tube 12 is inserted into the large diameter portion 61b. The relay member 60 seals between the downstream side end portion 13b of the inflow tube 12 and the collection bag 14 in an airtight and liquid-tight manner.

The downstream side end portion 25b of the common flow path 24 is positioned near the lower side portion 14a of the collection bag 14. Each upstream side end portion 27a of the first coupling flow path 26A and the second coupling flow path 26B branches from the downstream side end portion 25b of the common flow path 24. The first coupling flow path 26A and the second coupling flow path 26B have a V shape with a top portion facing downward (the upper portion opened). An intersection angle θ1 between the common flow path 24 and the first coupling flow path 26A is, for example, 10° to 85°. An intersection angle θ2 between the common flow path 24 and the second coupling flow path 26B is, for example, 10° to 85°. The intersection angle θ1 and the intersection angle θ2 are preferably 45° to 85°, and more preferably 75° to 85°.

The intersection angle θ1 and the intersection angle θ2 may be obtuse angles. In this case, the first coupling flow path 26A and the second coupling flow path 26B are V-shaped with their top portions facing upward (and their lower portions opened). That is, the first coupling flow path 26A and the second coupling flow path 26B have an inverted V (A) shape. The first coupling flow path 26A has a flow path length L1, and the second coupling flow path 26B has a flow path length L2.

In the illustrated example, the first housing chamber 28A has a substantially elliptical shape in a front view as viewed from the thickness direction of the collection bag 14. Specifically, the first housing chamber 28A has a long diameter LD and a short diameter SD. The long diameter LD extends along the up-down direction, and the short diameter SD extends along the width direction. Note that the first housing chamber 28A may have a shape other than a substantially elliptical shape. The volume of the first housing chamber 28A is, for example, about 8 mL to about 10 mL. The first housing chamber 28A temporarily stores the collection target M collected in the first sampling container 90A.

The upstream side end portion 31a of the first outflow path 30A is connected to the lowermost portion of the first housing chamber 28A. The first outflow path 30A extends toward the lower side portion 14a of the collection bag 14. The downstream side end portion 27b of the first coupling flow path 26A is connected to a portion close to the first housing chamber 28A in the first outflow path 30A. Therefore, the first coupling flow path 26A is connected below the first housing chamber 28A via the first outflow path 30A. Therefore, the first housing chamber 28A communicates with the common flow path 24 via the first outflow path 30A and the first coupling flow path 26A.

Alternatively, the downstream side end portion 27b of the first coupling flow path 26A may be connected to the lower portion of the first housing chamber 28A. In this case, the first housing chamber 28A communicates with the common flow path 24 only via the first coupling flow path 26A.

The first adapter 40A (see Figs. 1 to 3) is connected to a downstream side end portion 31b of the first outflow path 30A. Specifically, the first connection member 62A is provided at the downstream side end portion 31b (see Fig. 4) of the first outflow path 30A. The first connection member 62A is, for example, a sleeve made of a material harder than the collection bag 14. The first connection member 62A has a small diameter portion 63a and a large diameter portion 63b. The small diameter portion 63a is inserted into the downstream side end portion 31b of the first outflow path 30A. The large diameter portion 63b protrudes downward from the lower side portion 14a of the collection bag 14.

Here, the first connection member 62A includes a breakable plug (not illustrated) therein. In the initial state, the plug seals the first outflow path 30A. As a result, the collection target M is prevented from flowing from the first housing chamber 28A to the first adapter 40A. As described later, when the collection target M is transferred from the first housing chamber 28A to the first adapter 40A, the plug is broken by being bent. As a result, the first outflow path 30A is opened.

As illustrated in Figs. 1 to 3, the first adapter 40A includes an adapter body 42 and a communication pipe portion 44 provided at an upper end portion of the adapter body 42. By inserting the communication pipe portion 44 into the inner hole of the large diameter portion 63b of the first connection member 62A, the first adapter 40A is connected to the first outflow path 30A. The first connection member 62A seals between the communication pipe portion 44 and the collection bag 14 in a liquid-tight and air-tight manner.

The first adapter 40A has a needle pipe 46 in the adapter body 42. The needle pipe 46 is connected to the communication pipe portion 44. When the neck portion of the first sampling container 90A is inserted into the adapter body 42, the needle pipe 46 penetrates a plug (not illustrated) of the first sampling container 90A (see Fig. 3). Therefore, as the first connection member 62A is opened as described above, the first sampling container 90A and the first housing chamber 28A communicate with each other via the communication pipe portion 44 and the needle pipe 46.

The first adapter 40A includes a rubber cover 49 that covers the needle pipe 46. When the needle pipe 46 punctures the plug of the first sampling container 90A, the rubber cover 49 is compressed by being pushed toward the collection bag 14. The needle pipe 46 penetrates the compressed rubber cover 49. When the needle pipe 46 comes out of the plug of the first sampling container 90A, the rubber cover 49 extends by elastic restoring force to cover the needle pipe 46 again.

As illustrated in Fig. 4, the upstream side end portion 33a of the first exhaust flow path 32A is connected to the uppermost portion of the first housing chamber 28A and extends toward the upper side portion 14b of the collection bag 14. A first attachment member 64A is provided at a downstream side end portion 33b of the first exhaust flow path 32A. The first attachment member 64A is, for example, a sleeve made of a material harder than the collection bag 14. The first attachment member 64A has a small diameter portion 65a and a large diameter portion 65b. The small diameter portion 65a is inserted into the downstream side end portion 33b of the first exhaust flow path 32A. The large diameter portion 65b protrudes upward from the upper side portion 14b of the collection bag 14. A first attachment pipe portion 52A of a first exhaust valve 50A illustrated in Figs. 1 to 3 is inserted into the inner hole of the large diameter portion 65b.

As described above, the first exhaust valve 50A is connected to the collection bag 14 via the first attachment member 64A. The first attachment member 64A seals between the first attachment pipe portion 52A and the collection bag 14 in a liquid-tight and air-tight manner.

The first exhaust valve 50A has an internal filter (not illustrated) that allows gas to pass and prevents liquid from passing. In a case where the main component of the collection target M is water, the filter is preferably a hydrophilic filter. In this case, when the collection target M moves to the first exhaust valve 50A and comes into contact with the filter, the pores of the filter are closed by the liquid. After this blockage, the filter blocks the passage of gases and liquids. Therefore, backflow of air from the first exhaust valve 50A toward the first housing chamber 28A is prevented. A typical example of the collection target M whose main component is water is a blood product.

Shapes, positions, and the like of the second coupling flow path 26B, the second housing chamber 28B, the second outflow path 30B, the second connection member 62B, the second exhaust flow path 32B, and the second attachment member 64B are configured according to shapes, positions, and the like of the first coupling flow path 26A, the first housing chamber 28A, the first outflow path 30A, the first connection member 62A, the first exhaust flow path 32A, and the first attachment member 64A, respectively. The same applies to the first adapter 40A and the second adapter 40B, and the same applies to the first exhaust valve 50A (first attachment pipe portion 52A) and the second exhaust valve 50B (second attachment pipe portion 52B). Therefore, detailed description of the components will be omitted. In addition, the same parts or portions are given the same reference symbols.

In the illustrated example, the first coupling flow path 26A and the second coupling flow path 26B, the first housing chamber 28A and the second housing chamber 28B, the first outflow path 30A and the second outflow path 30B, and the first exhaust flow path 32A and the second exhaust flow path 32B are in a line symmetrical relationship with respect to the axis C1 (see Fig. 1) of the common flow path 24 as a center of symmetry. In this case, the intersection angle θ1 and the intersection angle θ2 are equal to each other, and the flow path length L1 of the first coupling flow path 26A and the flow path length L2 of the second coupling flow path 26B are equal to each other. Further, the volume of the first housing chamber 28A and the volume of the second housing chamber 28B are equal to each other.

However, the shapes and positions of these components may not be in a line symmetric relationship. That is, the intersection angle θ1 and the intersection angle θ2 may be different from each other. The flow path length L1 of the first coupling flow path 26A and the flow path length L2 of the second coupling flow path 26B may be different from each other, or the volume of the first housing chamber 28A and the volume of the second housing chamber 28B may be different from each other.

The collection kit 10 according to the first embodiment is basically configured as described above. Next, a collection method of separating the collection target M into the first sampling container 90A and the second sampling container 90B using the collection kit 10 will be described.

First, a process of connecting the medical bag 80 to the inflow tube 12 is performed. First, as illustrated in Fig. 2, the operator connects the medical bag 80 housing the collection target M such as a platelet product to the inflow tube 12. Specifically, the medical bag 80 has a supply tube 82. The operator joins the supply tube 82 to the upstream side end portion 13a of the inflow tube 12. At this time, the supply tube 82 is joined to the inflow tube 12 without coming into contact with outside air using an aseptic joining device.

Next, a process of transferring the collection target M to the first housing chamber 28A and the second housing chamber 28B is performed. This process is started and progressed in a state where the medical bag 80 is disposed above the collection bag 14. At this time point, the plugs of the first connection member 62A and the second connection member 62B are maintained in the closed state.

The collection target M is, for example, a liquid and is flowable. Therefore, the collection target M flows out of the medical bag 80 by gravity and flows into the common flow path 24 via the supply tube 82 and the inflow tube 12. The collection target M moves toward the lower side portion 14a of the collection bag 14 along the common flow path 24 by gravity. Each upstream side end portion 27a of the first coupling flow path 26A and the second coupling flow path 26B is connected to the downstream side end portion 25b of the common flow path 24. Therefore, the collection target M is divided into a first branch MF1 flowing from the common flow path 24 into the first coupling flow path 26A and a second branch MF2 flowing from the common flow path 24 into the second coupling flow path 26B. Each of the first branch MF1 and the second branch MF2 is one of the plurality of branches MF.

As described above, the first coupling flow path 26A is inclined upward as it is away from the common flow path 24 and approaches the first housing chamber 28A. Therefore, the first branch MF1 rises as moving toward the first housing chamber 28A in the first coupling flow path 26A. The air in the first coupling flow path 26A is pushed evenly by the rising first branch MF1 and moves toward the first housing chamber 28A. Therefore, the air remaining in the first coupling flow path 26A is reduced. At this point, the first outflow path 30A is closed by the plug of first connection member 62A. Therefore, the first branch MF1 temporarily flows into the first outflow path 30A and then flows into the first housing chamber 28A. Therefore, at least a part of the air in the first outflow path 30A is pushed out by the first branch MF1 and moves to the first housing chamber 28A. As a result, the air remaining in the first outflow path 30A is reduced.

When the first branch MF1 further flows into the first housing chamber 28A, the liquid level of the collection target M rises in the first housing chamber 28A. Accordingly, the air in the first housing chamber 28A is pushed by the collection target M and rises in the first housing chamber 28A. The air flows into the first attachment pipe portion 52A via the first exhaust flow path 32A connected to the uppermost portion of the first housing chamber 28A, and is further discharged from the first exhaust valve 50A to the atmosphere. When the shape of the first housing chamber 28A is a substantially elliptical shape in which the long diameter LD extends along the up-down direction, the air remaining in the first housing chamber 28A is reduced as compared with the case of other shapes.

After the first housing chamber 28A is filled with the collection target M, the collection target M flows into the first exhaust valve 50A via the first exhaust flow path 32A and the first attachment pipe portion 52A. When the collection target M comes into contact with the filter in the first exhaust valve 50A, the collection target M is captured and held in the pore of the filter. As a result, the collection target M is blocked by the filter. As a result, the first exhaust valve 50A is closed, and the collection target M is prevented from passing through the first exhaust valve 50A and being discharged to the outside air. Therefore, a necessary amount of the collection target M is stored in the first housing chamber 28A. The necessary amount is, for example, about 8 mL to 10 mL.

The second branch MF2 flowing into the second outflow path 30B via the second coupling flow path 26B is also housed in the second housing chamber 28B in the same manner as described above. In a typical example, as described above, the flow path length L1 of the first coupling flow path 26A and the flow path length L2 of the second coupling flow path 26B are equal to each other, and the volume of the first housing chamber 28A and the volume of the second housing chamber 28B are equal to each other. Moreover, the shapes and positions of the first coupling flow path 26A and the second coupling flow path 26B are in a line symmetric relationship, and the shapes and positions of the first housing chamber 28A and the second housing chamber 28B are in a line symmetric relationship. The same applies to other components. Therefore, the flow velocity and the flow rate of the first branch MF1 are substantially equal to the flow velocity and the flow rate of the second branch MF2. Thus, in the first housing chamber 28A and the second housing chamber 28B, substantially the same amount of collection targets M can be stored at substantially the same timing.

Next, the process of separating the medical bag 80 from the inflow tube 12 is performed. In this process, for example, a tube sealer such as a high-frequency sealer or an ultrasonic sealer is used. The tube sealer separates the inflow tube 12 from the supply tube 82 of the medical bag 80, and at the same time, seals the upstream side end portion 13a of the inflow tube 12 by welding. The inflow tube 12 and the supply tube 82 are separated from each other without exposing internal flow paths of the inflow tube 12 and the supply tube 82 to the outside air.

The medical bag 80 separated from the collection kit 10 is stored until the examination is completed. On the other hand, the collection kit 10 storing the collection target M in the first housing chamber 28A and the second housing chamber 28B is carried into a clean bench or a safety cabinet.

Next, a process of blocking communication between the first coupling flow path 26A and the coupling flow path 24 and between the second coupling flow path 26B and the common flow path 24, and a process of connecting the first sampling container 90A and the second sampling container 90B to the first adapter 40A and the second adapter 40B, respectively, are performed. Both processes can be performed in any order. That is, either process may be performed first.

Communication between each of the first coupling flow path 26A and the second coupling flow path 26B and the common flow path 24 can be blocked by forming a welding seal portion 84 in each of the first coupling flow path 26A and the second coupling flow path 26B, for example, as illustrated in Fig. 3. That is, in this case, the collection bag 14 is provided with a plurality of (two in the illustrated example) welding seal portions 84. The welding seal portion 84 can be formed by welding the two flexible sheets 22 by, for example, an ultrasonic sealer or a high-frequency sealer. Instead of the welding seal portion 84, a plurality of clamps such as clips may be used to block communication between each of the first coupling flow path 26A and the second coupling flow path 26B and the common flow path 24.

With this blocking, the first housing chamber 28A and the second housing chamber 28B become independent inner chambers. Therefore, the collection target M stored in the first housing chamber 28A based on the first branch MF1 does not flow into the second housing chamber 28B or the second outflow path 30B. Similarly, the collection target M stored in the second housing chamber 28B based on the second branch MF2 does not flow into the first housing chamber 28A or the first outflow path 30A. That is, the movement of the collection target M between the first housing chamber 28A and the second housing chamber 28B is prevented.

In order to connect the first sampling container 90A to the first adapter 40A, as illustrated in Fig. 3, a lid portion 48 of the first adapter 40A is opened, and the neck portion of the first sampling container 90A is inserted into the adapter body 42. As a result, the needle pipe 46 provided inside the adapter body 42 penetrates the plug of the first sampling container 90A. Similarly, the second sampling container 90B is connected to the second adapter 40B. Note that a release sheet 57 illustrated in Fig. 8 may be used instead of the lid portion 48.

Next, a process of transferring the collection target M in the first housing chamber 28A to the first sampling container 90A and transferring the collection target M in the second housing chamber 28B to the second sampling container 90B is performed. Therefore, the operator performs an operation of bending the plug of each of the first connection member 62A and the second connection member 62B to break the plug. As a result, the first outflow path 30A and the second outflow path 30B are opened. The collection target M in the first housing chamber 28A is sucked out by the negative pressure in the first sampling container 90A, passes through the first outflow path 30A, the inner hole of the first connection member 62A, and the communication pipe portion 44 and the needle pipe 46 of the first adapter 40A, and flows into the first sampling container 90A. Similarly, the collection target M in the second housing chamber 28B is sucked out by the negative pressure in the second sampling container 90B, passes through the second outflow path 30B, the inner hole of the second connection member 62B, and the communication pipe portion 44 and the needle pipe 46 of the second adapter 40B, and flows into the second sampling container 90B.

As described above, substantially the entire amount of the collection target M stored in the first housing chamber 28A is transferred to the first sampling container 90A, and substantially the entire amount of the collection target M stored in the second housing chamber 28B is transferred to the second sampling container 90B. That is, a first sample MS1 is introduced into the first sampling container 90A, and a second sample MS2 is introduced into the second sampling container 90B. Thereafter, the first sampling container 90A is removed from the first adapter 40A, and the second sampling container 90B is removed from the second adapter 40B. As a result, the collection (sampling) of the collection target M using the collection kit 10 is completed.

In a case where the collection target M is a blood product, a culture test is performed for the first sample MS1 and the second sample MS2. Specifically, the first sample MS1 in the first sampling container 90A is used, for example, for anaerobic culture, and whether or not anaerobic bacteria grow is observed. The second sample MS2 in the second sampling container 90B is used, for example, for aerobic culture, and whether or not aerobic bacteria grow is observed. In both tests, the first sampling container 90A and the second sampling container 90B are used as culture bottles. In a case where the first sample MS1 and the second sample MS2 pass the culture test, the collection target M in the medical bag 80 from which the first sample MS1 and the second sample MS2 are collected is determined to be a passed product. The passed product is used for patient treatment (blood transfusion and the like).

The first embodiment has the following effects.

The collection bag 14 has a structure in which the collection bag 14 is integrally formed using the two flexible sheets 22. Therefore, the collection kit 10 can be manufactured at low cost. In addition, since the collection target M can be prevented from moving between the first housing chamber 28A and the second housing chamber 28B, a necessary amount of the first sample MS1 and the second sample MS2 can be efficiently collected in the first sampling container 90A and the second sampling container 90B. Therefore, according to the collection kit 10, it is possible to cope with improvement in work efficiency such as culture test.

The first coupling flow path 26A and the second coupling flow path 26B are connected below the first housing chamber 28A and the second housing chamber 28B or lower portions of the first housing chamber 28A and the second housing chamber 28B, respectively. In this configuration, the collection target M is introduced into the first housing chamber 28A and the second housing chamber 28B from below or the lower portions of the first housing chamber 28A and the second housing chamber 28B. Accordingly, the air in the first housing chamber 28A and the air in the second housing chamber 28B rise and are exhausted from the first exhaust flow path 32A and the second exhaust flow path 32B provided above the first housing chamber 28A and the second housing chamber 28B. Therefore, air hardly remains in the first housing chamber 28A and the second housing chamber 28B. In other words, the residual amount of air in the first housing chamber 28A can be reduced, and the residual amount of air in the second housing chamber 28B can be reduced.

The first coupling flow path 26A and the second coupling flow path 26B communicate with the first housing chamber 28A and the second housing chamber 28B via the first outflow path 30A and the second outflow path 30B, respectively. In this case, when the collection target M is collected in the first housing chamber 28A and the second housing chamber 28B, at least a part of the air in the first outflow path 30A and the second outflow path 30B is replaced with the collection target M. Therefore, the amount of air mixed into the first sampling container 90A and the second sampling container 90B can be reduced.

When the collection bag 14 is viewed from the front in the thickness direction, the first housing chamber 28A and the second housing chamber 28B have a substantially elliptical shape having the long diameter LD and the short diameter SD. The long diameter LD extends along the up-down direction of the collection bag 14. Since the first housing chamber 28A and the second housing chamber 28B have such shapes, air hardly remains when the collection target M is introduced into the first housing chamber 28A and the second housing chamber 28B. Therefore, it is easy to accommodate a necessary amount of the collection target M in the first housing chamber 28A and the second housing chamber 28B.

The plurality of housing chambers 28 includes the first housing chamber 28A and a second housing chamber 28B. The plurality of coupling flow paths 26 include the first coupling flow path 26A that transfers the collection target M toward the first housing chamber 28A and the second coupling flow path 26B that transfers the collection target M toward the second housing chamber 28B, and is arranged such that the first coupling flow path 26A and the second coupling flow path 26B form a V shape with the top portion facing downward.

In this configuration, when the collection target M moves from the common flow path 24 toward the first housing chamber 28A and the second housing chamber 28B, the collection target M moves from the lower side to the upper side in the first coupling flow path 26A and the second coupling flow path 26B. Therefore, air is less likely to remain in the first coupling flow path 26A and the second coupling flow path 26B.

The shapes and positions of the first coupling flow path 26A and the second coupling flow path 26B, the first housing chamber 28A and the second housing chamber 28B, and the first outflow path 30A and the second outflow path 30B are in a line symmetric relationship with respect to the axis C1 of the common flow path 24.

In this case, it is easy to distribute the collection target M evenly to the first housing chamber 28A and the second housing chamber 28B. In addition, the housing amounts of the collection target M in the first housing chamber 28A and the second housing chamber 28B are substantially the same. Therefore, substantially the same amount of the collection target M can be transferred to each of the first sampling container 90A and the second sampling container 90B.

In addition, according to the collection method described above, the collection target M in the medical bag 80 can be efficiently transferred to the first sampling container 90A and the second sampling container 90B after being distributed by the collection bag 14. Therefore, the work efficiency of the test using the collection target M transferred to the first sampling container 90A and the second sampling container 90B can be improved. In addition, since the communication between the first coupling flow path 26A and the common flow path 24 and the communication between the second coupling flow path 26B and the common flow path 24 are blocked, the collection target M is prevented from moving between the first housing chamber 28A and the second housing chamber 28B. This allows a necessary amount of the collection target M to be introduced into each of the first sampling container 90A and the second sampling container 90B.

A plurality of welding seal portions 84 is respectively formed in the first coupling flow path 26A and the second coupling flow path 26B. As a result, communication between the first coupling flow path 26A and the common flow path 24 and communication between the second coupling flow path 26B and the common flow path 24 can be easily blocked. Alternatively, a plurality of clamps may be provided in each of the first coupling flow path 26A and the second coupling flow path 26B. Even in this case, the communication between the first coupling flow path 26A and the common flow path 24 and the communication between the second coupling flow path 26B and the common flow path 24 can be easily blocked. In either case, it is possible to reliably prevent the collection target M from moving between the first housing chamber 28A and the second housing chamber 28B.

Here, the collection kit 11 in which the first adapter 40A and the second adapter 40B are detachable from the collection bag 14 will be described with reference to Fig. 5. Note that the same components as those illustrated in Figs. 1 to 4 are denoted by the same reference numerals, and a detailed description of the components is omitted.

In the collection kit 11, a needle connector 200 for closing the first outflow path 30A is attached to the collection bag 14. On the other hand, the first adapter 40A includes the adapter body 42 and a needle unit 220. The adapter body 42 is connected to the first outflow path 30A via the first connection member 62A, the needle connector 200, and the needle unit 220.

The needle connector 200 has a fitting pipe portion (not illustrated) facing the collection bag 14. The fitting pipe portion is inserted into the first connection member 62A. The needle connector 200 has a cap attachment pipe portion (not illustrated) facing the adapter body 42. The cap attachment pipe portion is closed by a rubber cap 204. The rubber cap 204 prevents the collection target M in the first housing chamber 28A from leaking through the needle connector 200 before the adapter body 42 is attached to the collection bag 14. The upper surface of the rubber cap 204 abuts, for example, the lower surface of a first flange portion 206 constituting the needle connector 200.

The needle connector 200 further includes a second flange portion 208. The second flange portion 208 is positioned between the first flange portion 206 and the fitting pipe portion in the axial direction of the needle connector 200. An annular groove 210 is formed between the first flange portion 206 and the second flange portion 208.

The needle unit 220 includes a first needle 222, a second needle 224, and a needle hub 226. The needle hub 226 includes a cylindrical cup portion 228 having a hollow inside and an adapter holding portion 230. The cup portion 228 has a cup opening 232 formed at one end portion facing the needle connector 200 in the cup portion 228 and a slit 234 extending along the axial direction of the cup portion 228 starting from the cup opening 232. Therefore, when the rubber cap 204 is inserted into the hollow inside of the cup portion 228 through the cup opening 232, one end portion of the cup portion 228 is easily expanded based on the elastic deformation.

The needle hub 226 further includes a claw portion 236. The claw portion 236 is provided at the inner edge of the cup opening 232 in the cup portion 228 and protrudes inward in the diametrical direction of the cup portion 228.

The adapter holding portion 230 has a smaller diameter than the cup portion 228. The adapter holding portion 230 is positioned at the other end portion opposite to the one end portion where the cup opening 232 is formed in the axial direction of the cup portion 228. The other end portion is an end portion away from the needle connector 200 in the cup portion 228.

The first needle 222 is held by the needle hub 226 with a blade tip 222a facing the needle connector 200. The blade tip 222a of the first needle 222 is positioned in the hollow inside of the cup portion 228. The second needle 224 is held by the needle hub 226 with a blade tip 224a facing in the opposite direction to the blade tip 222a of the first needle 222. Most of the second needle 224 is exposed from the adapter holding portion 230. In the second needle 224, a portion exposed from the adapter holding portion 230 is covered with a rubber cover 238. The lumen of the first needle 222 and the lumen of the second needle 224 communicate with each other.

An insertion hole 235 is formed at one end portion facing the needle connector 200 in the axial direction of the adapter body 42. The adapter holding portion 230 is fitted into the insertion hole 235. The needle unit 220 and the adapter body 42 are assembled in advance by this fitting to constitute the first adapter 40A.

The second outflow path 30B and the second adapter 40B are connected in the same manner as described above. Note that the same components are denoted by the same reference numerals, and the detailed description thereof will be omitted. That is, the adapter body 42 of the second adapter 40B is connected to the second outflow path 30B via the second connection member 62B, the needle connector 200 and the needle unit 220.

The needle unit 220 and the adapter body 42 are connected to the needle connector 200 by fitting the rubber cap 204 to the cup portion 228 of the needle hub 226. When the edge portion of the cup portion 228 abuts on the second flange portion 208 of the needle connector 200, the fitting of the rubber cap 204 to the cup portion 228 ends. At the time of this fitting, the blade tip 222a of the first needle 222 penetrates the rubber cap 204 and reaches the inside of the cap attachment pipe portion of the needle connector 200. In addition, the claw portion 236 of the cup portion 228 is engaged with the annular groove 210 of the needle connector 200. This engagement prevents the needle hub 226 from falling out of the needle connector 200.

When the neck portion of the first sampling container 90A (see Fig. 3) is inserted into the adapter body 42 of the first adapter 40A, the blade tip 224a of the second needle 224 pierces the plug (not illustrated) of the first sampling container 90A. Therefore, when the first connection member 62A is opened as described above, the first sampling container 90A and the first housing chamber 28A communicate with each other via the first outflow path 30A, the internal path of the first connection member 62A, the internal path of the needle connector 200, the lumen of the first needle 222, and the lumen of the second needle 224. Therefore, the collection target M in the first housing chamber 28A moves to the first sampling container 90A.

The rubber cover 238 is compressed by being pushed toward the collection bag 14. The blade tip 224a of the second needle 224 penetrates the compressed rubber cover 238. When the blade tip 224a of the second needle 224 comes out of the plug of the first sampling container 90A, the rubber cover 238 stretches by its elastic restoring force and covers the second needle 224 again.

Also in the second sampling container 90B in which the neck portion is inserted into the adapter body 42 of the second adapter 40B, the collection target M in the second housing chamber 28B moves to the second sampling container 90B in the same manner as described above. As understood from the above, also in the collection kit 11 in which the first adapter 40A and the second adapter 40B are detachable with respect to the collection bag 14, the collection target M can be transferred from the first housing chamber 28A and the second housing chamber 28B to the first sampling container 90A and the second sampling container 90B, respectively.

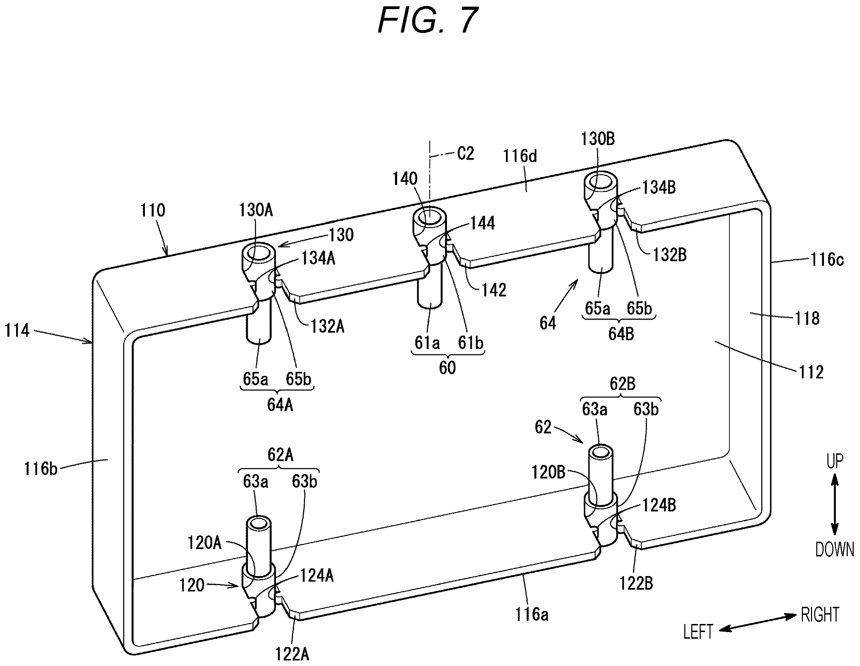

Next, a collection kit 100 according to a second embodiment will be described with reference to Figs. 6 and 7. Note that the same components as those illustrated in Figs. 1 to 4 are denoted by the same reference numerals, and a detailed description of the components is omitted.

The collection kit 100 includes a collection bag 14 and a holder 110 that holds the collection bag 14. The holder 110 has a box shape in which one end face of a hollow rectangular parallelepiped is removed. The holder 110 includes a main wall portion 112 extending along the up-down direction and the width direction, and a peripheral wall portion 114 continuing so as to be orthogonal to the main wall portion 112. The peripheral wall portion 114 includes a bottom portion 116a, a first side portion 116b, a second side portion 116c, and a ceiling portion 116d. The bottom portion 116a, the first side portion 116b, the second side portion 116c, and the ceiling portion 116d are connected in a rectangular shape. The holder 110 further includes an opening 118 that expands along the up-down direction and the width direction. The opening 118 faces the main wall portion 112.

The opening 118 may be covered with a cover (not illustrated). In this case, the cover is preferably transparent or semi-transparent. In this case, the collection bag 14 is surrounded by the holder 110 and the cover.

As illustrated in Fig. 7, the bottom portion 116a protrudes in the thickness direction from the lower side of the main wall portion 112. The bottom portion 116a has a first engagement hole 120A and a second engagement hole 120B as plurality of engagement holes 120. The first engagement hole 120A and the second engagement hole 120B are in a line symmetry relationship with an axis C2 of a fitting hole 140 to be described later as a symmetry center. A first notch 122A and a second notch 122B are formed in the bottom portion 116a. The first notch 122A and the second notch 122B extend in the thickness direction from the opening 118 as a starting point, and are continuous with the first engagement hole 120A and the second engagement hole 120B, respectively. A pair of first protrusion portions 124A is provided between the first notch 122A and the first engagement hole 120A, and a pair of second protrusion portions 124B is provided between the second notch 122B and the second engagement hole 120B.

A large diameter portion 63b of a first connection member 62A is inserted into the first engagement hole 120A. Specifically, the large diameter portion 63b of the first connection member 62A is pushed from the first notch 122A toward the first engagement hole 120A. At this time, at least one of the large diameter portion 63b and the pair of first protrusion portions 124A is elastically deformed. Therefore, the large diameter portion 63b passes through the pair of first protrusion portions 124A and is inserted into the first engagement hole 120A. After this insertion, the first connection member 62A or the pair of first protrusion portions 124A returns to the original shape by elasticity. Therefore, it is difficult for the large diameter portion 63b to be detached from the first engagement hole 120A in a state where no tensile force is applied to the first connection member 62A. As described above, the pair of first protrusion portions 124A prevents the large diameter portion 63b of the first connection member 62A from coming out of the first engagement hole 120A.

In the same manner as above, the large diameter portion 63b of a second connection member 62B is inserted into the second engagement hole 120B. For the reasons described above, in a state in which no tensile force is applied to the second connection member 62B, it is difficult for the large diameter portion 63b of the second connection member 62B to come out of the second engagement hole 120B. That is, the pair of second protrusion portions 124B function to prevent the large diameter portion 63b of the second connection member 62B from coming out of the second engagement hole 120B.

The ceiling portion 116d faces the bottom portion 116a with the first side portion 116b and the second side portion 116c interposed therebetween. The ceiling portion 116d has a first positioning hole 130A, the fitting hole 140, and a second positioning hole 130B. The first positioning hole 130A and the second positioning hole 130B are in a line symmetry relationship with the axis C2 of the fitting hole 140 as a symmetry center. In the ceiling portion 116d, a first insertion port 132A, a slit 142, and a second insertion port 132B are formed. The first insertion port 132A and the second insertion port 132B extend in the thickness direction from the opening 118 as a starting point, and are continuous with the first positioning hole 130A and the second positioning hole 130B, respectively. A pair of first stoppers 134A is provided between the first insertion port 132A and the first positioning hole 130A, and a pair of second stoppers 134B is provided between the second insertion port 132B and the second positioning hole 130B.

A large diameter portion 65b of a first attachment member 64A is inserted into the first positioning hole 130A. Specifically, the large diameter portion 65b is pushed from the first insertion port 132A toward the first positioning hole 130A. At this time, at least one of the large diameter portion 65b and the pair of first stoppers 134A is elastically deformed. Therefore, the large diameter portion 65b passes through the pair of first stoppers 134A and is inserted into the first positioning hole 130A. After this insertion, the large diameter portion 65b or the pair of first stoppers 134A returns to their original shape due to elasticity. Therefore, it is difficult for the large diameter portion 65b to be detached from the first positioning hole 130A in a state where no tensile force is applied to the first attachment member 64A. As described above, the pair of first stoppers 134A prevents the large diameter portion 65b of the first attachment member 64A from coming out of the first positioning hole 130A.

In the same manner as above, the large diameter portion 65b of a second attachment member 64B is inserted into the second positioning hole 130B. For the reasons described above, in a state in which no tensile force is applied to the second attachment member 64B, it is difficult for the large diameter portion 65b of the second attachment member 64B to come out of the second positioning hole 130B. That is, the pair of second stoppers 134B function to prevent the large diameter portion 65b of the second attachment member 64B from coming out of the second positioning hole 130B.

The slit 142 also extends in the thickness direction starting from the opening 118 and is continuous with the fitting hole 140. A pair of claw portions 144 is provided between the slit 142 and the fitting hole 140.

A large diameter portion 61b of a relay member 60 is inserted into the fitting hole 140. Specifically, the large diameter portion 61b is pushed from the slit 142 toward the fitting hole 140. At this time, at least one of the large diameter portion 61b and the pair of claw portions 144 is elastically deformed. Therefore, the large diameter portion 61b passes through the pair of claw portions 144 and is inserted into the fitting hole 140. After this insertion, the large diameter portion 61b or the pair of claw portions 144 returns to their original shape due to elasticity. Therefore, it is difficult for the large diameter portion 61b to be detached from the fitting hole 140 in a state where no tensile force is applied to the relay member 60. As described above, the pair of claw portions 144 prevents the large diameter portion 61b of the relay member 60 from coming out of the fitting hole 140.

Moreover, the large diameter portions 63b of the first connection member 62A and the second connection member 62B are pressed against the inner surfaces of the first engagement hole 120A and the second engagement hole 120B by the first protrusion portions 124A and the second protrusion portions 124B, respectively. Therefore, the first connection member 62A and the second connection member 62B are firmly held by the first engagement hole 120A and the second engagement hole 120B, respectively. Similarly, the large diameter portions 65b of the first attachment member 64A and the second attachment member 64B are pressed against the inner surfaces of the first positioning hole 130A and the second positioning hole 130B by the first stoppers 134A and the second stoppers 134B, respectively, and the large diameter portion 61b of the relay member 60 is pressed against the inner surface of the fitting hole 140 by the claw portions 144. Therefore, the first attachment member 64A and the second attachment member 64B are firmly held in the first positioning hole 130A and the second positioning hole 130B, respectively, and the relay member 60 is firmly held in the fitting hole 140.

Before holding the collection bag 14 in the holder 110, communication between each of the first coupling flow path 26A and the second coupling flow path 26B and the common flow path 24 may be blocked. Alternatively, with the collection bag 14 held in the holder 110, communication between the first coupling flow path 26A and the second coupling flow path 26B and the common flow path 24 can be blocked. In order to block the communication, for example, similarly to the first embodiment, a welding seal portion 84 (see Fig. 3) is formed in each of the first coupling flow path 26A and the second coupling flow path 26B. Alternatively, it is also possible to block the communication using a clamp such as a clip.

The second embodiment has the following effects.

By holding the collection bag 14 with the holder 110 as described above, a tensile force for pulling the collection bag 14 downward and a tensile force for pulling the collection bag 14 upward act on the collection bag 14. Based on such a tensile force, the collection bag 14 is maintained in the shape illustrated in Fig. 6 even though the material of the collection bag 14 is the flexible sheet 22. In this manner, the holder 110 holds the collection bag 14 to maintain the shape of the collection bag 14.

For example, even when the collection target M is transferred from a medical bag 80 (see Fig. 2) to a first sampling container 90A and a second sampling container 90B, the shape of the collection bag 14 is maintained by the holder 110. Therefore, the collection kit 100 can be easily handled.

In addition, the operator can visually recognize the collection bag 14 through the opening 118. Therefore, the operator can easily visually check whether a collection target M is stored in a first housing chamber 28A and a second housing chamber 28B.

In a case where the opening 118 is covered with a cover, the entire collection bag 14 is surrounded by the holder 110 and the cover. Therefore, the collection bag 14 can be protected. In a case where the cover is transparent or semi-transparent, it is easy to visually check whether or not the collection target M is stored in the first housing chamber 28A and the second housing chamber 28B.

In addition, also in the collection kit 100 according to the second embodiment, the same effects as those of the collection kit 10 according to the first embodiment can be obtained.

Next, a modification of the second embodiment will be described. Note that the same components as those illustrated in Figs. 1 to 7 are denoted by the same reference numerals, and a detailed description of the components is omitted.

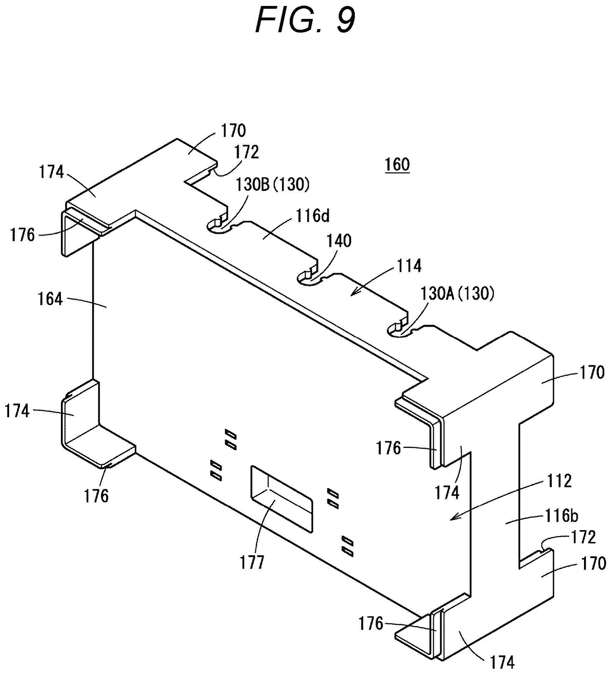

As illustrated in Figs. 8 and 9, the collection kit 150 according to a modification of the second embodiment includes the collection bag 14 and a holder 160 that holds the collection bag 14.

In the holder 160, the main wall portion 112 has a substantially rectangular shape, and has a main surface 162 facing the collection bag 14 and a back surface 164 which is a back side of the main surface 162. The direction connecting the main surface 162 and the back surface 164 is the thickness direction of the holder 160. The outer peripheral edge portion of the main wall portion 112 has the peripheral wall portion 114. The peripheral wall portion 114 protrudes in a direction away from the main surface 162 along the thickness direction. Therefore, the main surface 162 is positioned in an internal space 166 formed by the peripheral wall portion 114.

Each of the four corner portions in the outer peripheral edge portion of the main wall portion 112 has a first protruding portion 170 integrally continuous with the peripheral wall portion 114. The first protruding portion 170 protrudes beyond the peripheral wall portion 114 in a direction away from the main surface 162 along the thickness direction. When the first protruding portion 170 is viewed from the thickness direction of the holder 160, the first protruding portion 170 has an L shape. In the first protruding portion 170, a first engagement step portion 172 is formed at an end portion in the thickness direction. In the illustrated example, the first engagement step portion 172 is constituted by an inner step portion formed by cutting out a part of the inner surface of the first protruding portion 170.

As illustrated in Fig. 9, each of the four corner portions on the outer peripheral edge portion of the main wall portion 112 has a second protruding portion 174. The second protruding portion 174 protrudes in a direction opposite to the first protruding portion 170 and away from the back surface 164 along the thickness direction. When the second protruding portion 174 is viewed from the thickness direction of the holder 160, the second protruding portion 174 has an L shape. The first protruding portion 170 and the second protruding portion 174 are integrally continuous with the peripheral wall portion 114.

A second engagement step portion 176 is formed at the end portion of the second protruding portion 174 in the thickness direction. In the illustrated example, the second engagement step portion 176 is constituted by an outer step portion formed by cutting out a part of the outer surface of the second protruding portion 174. Here, the first engagement step portion 172 may be an outer step portion formed by cutting out a part of the outer surface of the first protruding portion 170. In this case, the second engagement step portion 176 is an inner step portion formed by cutting out a part of the inner surface of the second protruding portion 174.

As illustrated in Fig. 8, the main surface 162 is provided with an abutting portion 177 and four pin portions 178. The abutting portion 177 and the four pin portions 178 protrude from the main surface 162 along the thickness direction toward the collection bag 14. The abutting portion 177 is a convex portion having a substantially quadrangular cylindrical shape.

The bottom portion 116a of the peripheral wall portion 114 has the engagement hole 120 (the first engagement hole 120A and the second engagement hole 120B) and a clearance notch 180 as a notch. The clearance notch 180 is a clearance portion for avoiding interference of the clamp portion of a jig (not illustrated) with the bottom portion 116a when the collection kit 150 is attached to the jig. The clearance notch 180 is formed below the abutting portion 177 in the bottom portion 116a. On the other hand, the ceiling portion 116d of the peripheral wall portion 114 has the first positioning hole 130A, the fitting hole 140, and the second positioning hole 130B.

As in the second embodiment, the opening 118 may be covered with a cover (not illustrated). In this case, the cover is preferably transparent or semi-transparent. In this case, the collection bag 14 is surrounded by the holder 160 and the cover.

In this case, four insertion holes 182 are formed in the collection bag 14. A downstream portion of the first coupling flow path 26A is positioned between two of the four insertion holes 182. A downstream portion of the second coupling flow path 26B is positioned between two of the four insertion holes 182. The four pin portions 178 constituting the holder 160 are respectively inserted into the four insertion holes 182.

In the illustrated example, a release sheet 57 is peelably attached to an adapter body 42 of a first adapter 40A. Similarly, the release sheet 57 is peelably attached to the adapter body 42 of a second adapter 40B. Alternatively, a lid portion 48 may be provided on the adapter body 42 as in the first embodiment.

The modification has the following effects.

The holder 160 has the clearance notch 180 into which a jig for holding the collection kit 150 is inserted.

For example, it is assumed that communication between the common flow path 24 and each of the first coupling flow path 26A and the second coupling flow path 26B is blocked by crushing the first coupling flow path 26A and the second coupling flow path 26B with the clamp portion of the jig. Since the holder 160 has the clearance notch 180, the clamp portion is inserted into the clearance notch 180. This prevents the clamp portion, which is a part of the jig, from interfering with the bottom portion 116a of the holder 160.

The holder 160 has a plurality of pin portions 178. The collection bag 14 has the plurality of insertion holes 182 with which the plurality of pin portions 178 is engaged respectively. The plurality of insertion holes 182 is formed at positions adjacent to the plurality of coupling flow paths 26 (the first coupling flow path 26A and the second coupling flow path 26B), respectively.

By engaging the pin portion 178 with the insertion hole 182, the collection bag 14 is reliably held by the holder 160. In addition, the collection bag 14 is prevented from being displaced with respect to the holder 160.

The holder 160 has the main surface 162 facing the collection bag 14 and the abutting portion 177 protruding toward the collection bag 14 on the main surface 162. The abutting portion 177 abuts on a portion where the plurality of coupling flow paths 26 is formed in the collection bag 14.

When the communication between the first housing chamber 28A and the second housing chamber 28B is blocked by pressing the vicinity of the coupling flow path 26 with the clamp portion, the collection bag 14 is sandwiched between the clamp portion and the abutting portion 177. Therefore, it is possible to reduce the size of the clamp portion as compared with the case where the abutting portion 177 does not exist. In addition, since the abutting portion 177 supports the clamp portion, it is easy to block the communication between the plurality of coupling flow paths 26 and the common flow path 24.

The holder 160 has the main surface 162 facing the collection bag 14 and the back surface 164 that is the back side of the main surface 162. The outer peripheral edge portion of the holder 160 has the first protruding portion 170 protruding in a direction away from the main surface 162 and the second protruding portion 174 protruding in a direction away from the back surface 164 along a thickness direction connecting the main surface 162 and the back surface 164. The first protruding portion 170 has the first engagement step portion 172. The second protruding portion 174 has the second engagement step portion 176 having a shape capable of engaging with the first engagement step portion 172.

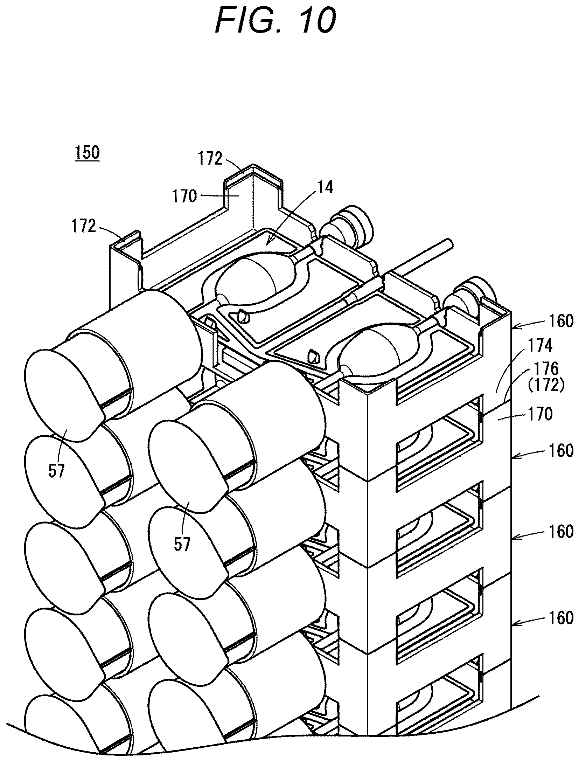

Therefore, in the case of storing or transporting the plurality of collection kits 150, as illustrated in Fig. 10, it is possible to stack the holder 160 holding the collection bag 14 on another holder 160 holding another collection bag 14. At this time, the second engagement step portion 176 of another holder 160 is engaged with the first engagement step portion 172 of the holder 160. In this manner, the plurality of holders 160 can be stacked via the first engagement step portion 172 and the second engagement step portion 176 in a state of holding each of the plurality of collection bags 14. That is, the plurality of collection kits 150 can be stacked along the thickness direction.

Therefore, the plurality of collection bags 14 and the plurality of holders 160 can be organized and stored together without being scattered. As a result, the concern of losing the plurality of collection bags 14 and the plurality of holders 160 is eliminated.

In the holders 110 and 160, for example, a holding hole for being held by a jig may be formed in the main wall portion 112. In this case, the holders 110 and 160 can be easily held by the jig by providing the holding pins in the jig and passing the holding pins through the holding holes.

In the second embodiment and the modification thereof, as illustrated in Fig. 5, the first adapter 40A and the second adapter 40B may be configured to be detachable.

Note that, the present invention is not limited to the above disclosure, and various configurations can be adopted without departing from the gist of the present invention.

## Claims

1. A collection kit for collecting a collection target housed in a medical bag into a plurality of sampling containers, the collection kit comprising:
an inflow tube to which the medical bag is connected; and
a collection bag connected to a downstream of the inflow tube and formed by overlapping and welding two flexible sheets,
wherein
the collection bag includes:
a plurality of housing chambers that houses the collection target,
a common flow path connected to the downstream of the inflow tube,
a plurality of coupling flow paths that branches from the common flow path and communicate with the plurality of housing chambers, respectively,
a plurality of exhaust flow paths connected to upper portions of the plurality of housing chambers, respectively, for exhausting air inside the plurality of housing chambers, and
a plurality of outflow paths connected to lower portions of the plurality of housing chambers, respectively, allows the collection target to flow out from the plurality of housing chambers, and transfers collection target to the plurality of sampling containers, respectively.

2. The collection kit according to claim 1, wherein the plurality of coupling flow paths is connected to the lower portions of the plurality of housing chambers or lower sides of the plurality of housing chambers, respectively.

3. The collection kit according to claim 2, wherein the plurality of coupling flow paths communicates with the plurality of housing chambers via the plurality of outflow paths, respectively.

4. The collection kit according to claim 1, further comprising a plurality of adapters which are connected to the plurality of the outflow paths and to which the plurality of sampling containers are attached, respectively.

5. The collection kit according to claim 1, comprising a holder that holds the collection bag and maintains a shape of the collection bag.

6. The collection kit according to claim 5, wherein the collection kit includes: a plurality of adapters respectively connected to the plurality of outflow paths and to which the plurality of sampling containers are respectively attached, and a plurality of connection members respectively connecting the plurality of adapters to the plurality of outflow paths, and the holder has a plurality of engagement holes respectively engaged with the plurality of connection members.

7. The collection kit according to claim 5, wherein the collection kit includes a relay member that connects the inflow tube to the common flow path, and the holder has a fitting hole into which the relay member is fitted.

8. The collection kit according to claim 5, wherein the collection kit includes a plurality of attachment members for attaching a plurality of exhaust valves to the plurality of exhaust flow paths, respectively, and the holder has a plurality of positioning holes for positioning and fixing the plurality of attachment members, respectively.

9. The collection kit according to claim 5, wherein the holder has a notch into which a jig for holding the collection kit is inserted.

10. The collection kit according to claim 5, wherein the holder has a plurality of pin portions, the collection bag has a plurality of insertion holes into which the plurality of pin portions is respectively inserted, and
the plurality of insertion holes is formed at positions adjacent to the plurality of coupling flow paths.

11. The collection kit according to claim 5, wherein the holder has a main surface facing the collection bag and an abutting portion protruding toward the collection bag on the main surface, and
the abutting portion abuts on a portion of the collection bag where the plurality of coupling flow paths is formed.

12. The collection kit according to claim 5, wherein the holder has a main surface facing the collection bag and a back surface that is a back side of the main surface,
an outer peripheral edge portion of the holder has a first protruding portion protruding in a direction away from the main surface and a second protruding portion protruding in a direction away from the back surface along a thickness direction connecting the main surface and the back surface,
the first protruding portion has a first engagement step portion, the second protruding portion has a second engagement step portion,
the plurality of collection kits can be stacked in the thickness direction, and
in a state where the plurality of collection kits is stacked, the first engagement step portion of one of the collection kits adjacent to each other and the second engagement step portion of the other of the collection kits adjacent to each other engage with each other.

13. The collection kit according to claim 1, wherein when the collection bag is viewed from the thickness direction of the collection bag, the plurality of housing chambers has a substantially elliptical shape having a major axis and a minor axis, and the major axis extends along an up-down direction.

14. The collection kit according to claim 1, wherein the plurality of housing chambers includes a first housing chamber and a second housing chamber,
the plurality of coupling flow paths includes a first coupling flow path that transfers the collection target toward the first housing chamber and a second coupling flow path that transfers the collection target toward the second housing chamber, and
the first coupling flow path and the second coupling flow path are arranged so as to form a V shape having a top portion facing downward.

15. The collection kit according to any one of claims 1 to 14, wherein shapes and positions in each of the plurality of coupling flow paths, the plurality of housing chambers, and the plurality of outflow paths are in a line symmetric relationship with the common flow path as a center of symmetry.

16. A collection method for collecting a collection target housed in a medical bag into a plurality of sampling containers via a collection kit, wherein
the collection kit includes: an inflow tube to which the medical bag is connected, and
a collection bag connected to a downstream of the inflow tube and formed by overlapping and welding two flexible sheets,
in which
the collection bag includes:
a plurality of housing chambers that houses the collection target,
a common flow path connected to the downstream of the inflow tube,
a plurality of coupling flow paths that branches from the common flow path and communicate with the plurality of housing chambers, respectively,
a plurality of exhaust flow paths connected to upper portions of the plurality of housing chambers, respectively, for exhausting air inside the plurality of housing chambers, and
a plurality of outflow paths connected to lower portions of the plurality of housing chambers, respectively, allows the collection target to flow out from the plurality of housing chambers, and transfers the collection target to the plurality of sampling containers, respectively, and
the collection method includes:
a process of connecting the medical bag to the inflow tube,
a process of dividing the collection target moved from the medical bag into the collection bag through the inflow tube and the common flow path into a plurality of branches by the plurality of coupling flow paths and introducing the plurality of branches into the plurality of housing chambers, respectively,
a process of separating the medical bag from the inflow tube after introducing the plurality of branches into the plurality of housing chambers, respectively, and
a process of blocking communication between the plurality of coupling flow paths and the common flow path after introducing the plurality of branches into the plurality of housing chambers, respectively,
a process of respectively connecting the plurality of sampling containers to the plurality of outflow paths after the plurality of branches is introduced into the plurality of housing chambers, respectively, and
a process of transferring the collection target from the plurality of housing chambers to the plurality of sampling containers respectively connected to the plurality of outflow paths.

17. The collection method according to claim 16, wherein communication between the plurality of coupling flow paths and the common flow path is blocked by forming a plurality of welding seal portions in the plurality of coupling flow paths, respectively, or providing a plurality of clamps in the plurality of coupling flow paths, respectively.
